Europäisches Patentamt

**European Patent Office**

**Office européen des brevets**

(11) Veröffentlichungsnummer: **0 002 487**
**B2**

(12) **NEUE EUROPÄISCHE PATENTSCHRIFT**

(45) Veröffentlichungstag der neuen Patentschrift:
24.06.87

(21) Anmeldenummer: **78101567.2**

(22) Anmeldetag: **05.12.78**

(51) Int. Cl.⁴: **C 04 B 30/02,** C 04 B 14/38,
G 21 C 11/08

(54) **Wärmedämmplatte und ihre Verwendung.**

(30) Priorität: **09.12.77 DE 2754956**

(43) Veröffentlichungstag der Anmeldung:
**27.06.79 Patentblatt 79/13**

(45) Bekanntmachung des Hinweises auf die Patenterteilung:
**18.02.81 Patentblatt 81/7**

(45) Bekanntmachung des Hinweises auf die Entscheidung
über den Einspruch:
**24.06.87 Patentblatt 87/26**

(84) Benannte Vertragsstaaten:
**BE CH FR GB NL SE**

(56) Entgegenhaltungen:
**DE - A - 2 049 054**
**DE - A - 2 311 816**
**DE - B - 2 524 096**
**FR - A - 2 102 491**
**US - A - 3 055 831**
**US - A - 4 014 704**

**CHEMICAL ABSTRACTS, Vol. 57, Nr. 6980g, 1962,**
*Columbus Ohio, USA,* I.N. FRANTSEVICH *"Heat*
*resistance of present-day construction materials"*
**CHEMICAL ABSTRACTS, Vol. 64, Nr. 15313b, 1966,**
*Columbus Ohio, USA, D.L. BRODER et al. "Reducing*
*the flux of penetrating secondary gamma-radiation"*
**Report United States Atomic Energy Commission**
**ALO-3633-1, 1966, Johns-Manville Research and**

(73) Patentinhaber: **Grünzweig + Hartmann und Glasfaser**
**AG, Bürgermeister-Grünzweig-Strasse 1-47,**
**D-6700 Ludwigshafen am Rhein (DE)**

(72) Erfinder: **Mohr, Günther, Dipl.-Ing., Herzogstrasse 19,**
**D-6700 Ludwigshafen/Rhein (DE)**
Erfinder: **Kummermehr, Hans, Prinzregentenstrasse 34,**
**D-6700 Ludwigshafen/Rhein (DE)**

(74) Vertreter: **Kuhnen, Wacker & Partner,**
**Schneggstrasse 3-5 Postfach 1729, D-8050 Freising (DE)**

EP 0 002 487 B2

## Beschreibung

Die Erfindung bezieht sich auf eine aus einem Gemisch aus hochdisperser pyrogener Kieselsäure (Silika-Aerogel) und Aluminiumsilikatwolle unter Beigabe eines Trübungsmittels gepresste Wärmedämmplatte. Zur Definition des Begriffes «pyrogene Kieselsäure vgl. Römpps Chemie-Lexikon, 7. Auflage, Bd. 5, Seite 3220, 1. Spalte Mitte.

Eine solche Wärmedämmplatte ist aus der FR-A 2 102 491 bekannt geworden.

Durch die Beigabe von Trübungsmitteln werden die Wärmedämmeigenschaften solcher Platten erhöht, weil die IR-Durchlässigkeit verringert wird. Bei den bekannten Wärmedämmplatten finden als Trübungsmittel $TiO_2$, Rutil, Ilmenit, Chromoxid, Manganoxid, Eisenoxid, aber auch Graphit oder Russ Verwendung.

Von den aufgezählten Trübungsmitteln können Graphit und Russ bei höheren Temperaturen nur dann Verwendung finden, wenn die dauernde Abwesenheit von Sauerstoff gewährleistet ist. Im anderen Fall würden nämlich die Trübungseigenschaften von Graphit und Russ durch deren Zersetzung verloren gehen. Ähnliches gilt auch für einen Teil der aufgezählten Oxide, insbesondere beispielsweise Manganoxid.

Aber auch die sonst verwendeten Trübungsmittel, wie beispielsweise $TiO_2$, Rutil oder Ilmenit führen nicht zu dem gewünschten Erfolg. Unter atmosphärem Druck weisen mit solchen Trübungsmitteln hergestellte Wärmedämmplatten nämlich eine verhältnismässig starke Abhängigkeit ihrer Wärmeleitzahl von der Mitteltemperatur auf.

Hier setzt die Erfindung ein und will eine Wärmedämmplatte schaffen, bei der die Abhängigkeit ihrer Wärmeleitzahl von der Mitteltemperatur wesentlich geringer ist und darüber hinaus bessere Trübungseigenschaften, insbesondere im oberen Temperaturbereichs von ca 400°C erwartet werden können. Die der Erfindung zugrundeliegende Aufgabe wird dadurch gelöst, dass als Trübungsmittel ein Karbid des Siliziums, Bors, Tantals oder Wolframs allein oder im Gemisch in einer solchen Korngrösse verwendet ist, dass der Rückstand auf dem DIN-Sieb 10 μm Maschenweite unter 5% liegt.

Die Verwendung von Karbiden für feuerfeste Isolierzusammensetzungen gehört an sich bereits zum Stande der Technik. So ist beispielsweise aus der DE-A 2 557 741 bzw. aus der ihr entsprechenden US-A 4 014 704 beriets ein Siliziumkarbidzusatz zu einer feuerfesten Faserisolierzusammensetzung, die im wesentlichen aus Aluminiumsilikatfaser besteht bekanntgeworden. Mit dieser Masse sollen insbesondere Giesstrichter für Metallschmelzen hergestellt werden. Abgesehen davon, dass die Korngrösse des dort eingesetzten Siliziumkarbids wesentlich höher als bei dem erfindungsgemäss verwendeten Siliziumkarbid ist, fehlt bei dieser Faserisolierzusammensetzung auch die Verwendung von pyrogener Kieselsäure oder Silika-Aerogel als wesentlicher Bestandteil des Wärmedämmformkörpers.

Die Verwendung von Borkarbid bei der Wärmedämmung von kerntechnischen Anlagen ist aus Chemical Abstracts, Vol. 64, Nr. 15313b, 1966 bekannt. Dort dient aber die Verwendung von Borkarbid zur Strahlungsabschirmung.

In der DE-A 2 049 054 und der DE-A 2 311 816 sind bereits Formkörper aus wärmeisolierendem Material beschrieben, die aus Gemischen aus Aluminiumsilikatfasern, kolloidalem Siliziumdioxidsol und feinverteiltem Siliziumkarbid hergestellt sein können. In den zitierten Schriften ist jedoch pyrogene Kieselsäure nicht ausdrücklich erwähnt, und SiC ist neben einer Reihe anderer Stoffenur als feuerfestes Material und nicht auch als Trübungsmittel angeführt.

Selbstverständlich sind sowohl Siliziumkarbid als auch Borkarbid bei gleicher Feinheit teuerer als beispielsweise die oben aufgezählten, bisher verwendeten Trübungsmittel. Allerdings hat sich gezeigt, dass bei den Karbiden, insbesondere beim Siliziumkarbid, auf die Verwendung der in der Regel nicht mehr verwendbaren Filterstäube aus Mahlanlagen zurückgegriffen werden kann. Damit ist ein Produkt der wirtschaftlichen Verwendbarkeit zugängig gemacht, das bisher als Abfallprodukt angesehen wurde und dessen Beseitigung infolge seiner schlechten Wasserhaltungseigenschaften nicht problemlos war. Durch die Verwendung solcher Karbide ist somit neben der Erreichung der gewünschten technischen Effekte auch ein nützlicher Beitrag zum Umweltschutz geleistet, weil nunmehr diese Karbide einer nützlichen Verwendung zugeführt werden können.

Die angegebenen Karbide zeichnen sich durch hohe thermische und chemische Stabilität auch bei höheren Temperaturen aus und besitzen ferner die geforderte niedrige Transmission in einem breiten IR-Spektralbereich.

In der beigefügten graphischen Darstellung ist das typische Verhalten von Wärmedämmplatten bei Verwendung von $TiO_2$ (Kurve 1), Siliziumkarbid (Kurve 2) und Borkarbid (Kurve 3) dargestellt.

Es ist aus der graphischen Darstellung ohne weiteres erkennbar, dass insbesondere bei den hohen Mitteltemperaturen über 100°C die Verwendung von Silizium- und insbesondere von Borkarbid eine deutliche Verbesserung der Abhängigkeit der Wärmeleitzahl λ von der Mitteltemperatur $t_m$ zur Folge hat.

Selbstverständlich ist es möglich, bei Wärmedämmplatten, die $TiO_2$ als Trübungsmittel enthalten, die Wärmeleitzahl im oberen Temperaturbereich durch Erhöhung der Rohdichte zu verbessern. Auch hier bietet jedoch der erfindungsgemässe Vorschlag der Verwendung von Karbiden als Trübungsmittel insofern einen Vorteil als Wärmedämmplatten bei gleicher Dicke um ca. 60% leichter ausfallen, was in vielen Fällen erwünscht ist. Selbstverständlich können auch die mit Silizium- oder Borkarbid als Trübungsmittel hergestellten Wärmedämmplatten durch Erhöhen des Raumgewichtes in der Abhängigkeit ihrer Wärmeleitzahl λ von der Mitteltemperatur $t_m$ noch verbessert werden.

Bei Isolierungen im atomaren Bereich, d.h. in kerntechnischen Anlagen verwendete Wärmeisolierungen an Kernreaktoren der verschiedensten Bauart sowie an thermisch zu isolierenden Teilen von Aufbereitungsanlagen, insbesondere dann, wenn in diesem Bereich eine Neutronenstrahlung mit thermischer Energie vorhanden ist, ergeben sich weitere Vorteile beim Einsatz von Borkarbid dadurch, dass infolge von dessen grossem Wirkungsquerschnitt gegenüber thermischen Neutronen die Wärmedämmung der entsprechenden Teil mit zur Abschirmung herangezogen werden kann. Dabei ist es vorteilhaft, wenn das Borkarbid einen Anteil zwischen 20 und 35 Gew.% aufweist.

Im folgenden sollen zwei Ausführungsbeispiele angegeben werden:

Es wurde eine Wärmedämmplatte hergestellt aus folgender Zusammensetzung:

59,6 Gew.% pyrogene Kieselsäure
34,8 Gew.% Siliziumkarbid
 5,6 Gew.% Mineralwolle.

Bei einer anderen Ausführungsform wurden verwendet:

68,4 Gew.% pyrogene Kieselsäure
26,04 Gew.% Borkarbid
 5,6 Gew.% Mineralwolle.

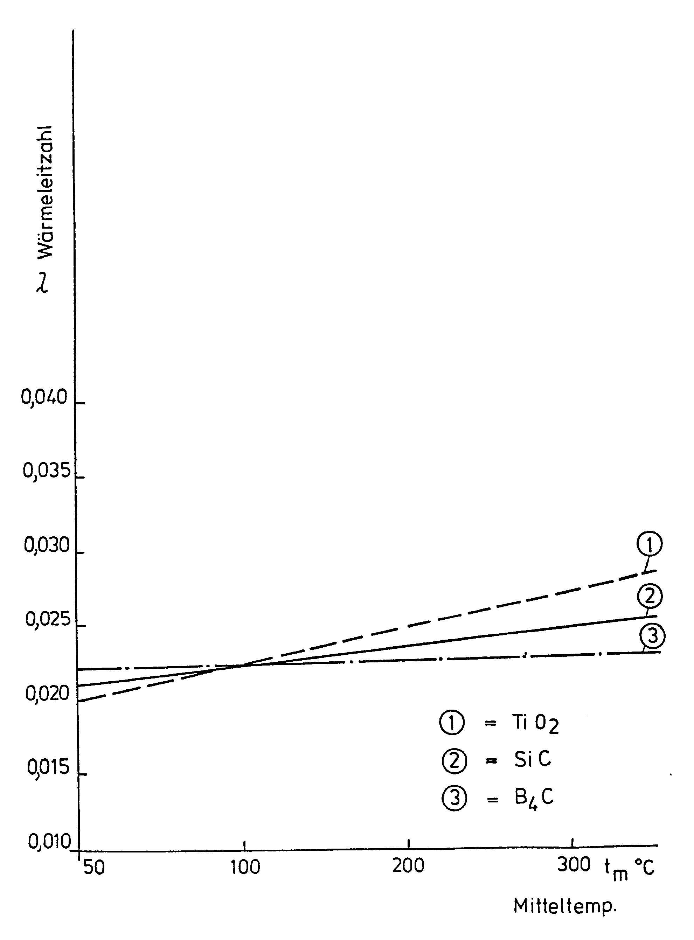

## Patentansprüche

1. Aus einem Gemisch aus hochdisperser pyrogener Kieselsäure und Aluminiumsilikatwolle unter Beigabe eines Trübungsmittels gepresste Wärmedämmplatte, dadurch gekennzeichnet, dass als Trübungsmittel ein Karbid des Siliziums, Bors, Tantals oder Wolframs allein oder im Gemisch mit einer solchen Korngrösse verwendet ist, dass der Rückstand auf dem DIN-Sieb 10 μm Maschenweite unter 5% liegt.

2. Verwendung einer Wärmedämmplatte nach Anspruch 1 mit Borkarbid als Trübungsmittel in Mengen zwischen 20 und 35 Gew.% in kerntechnischen Anlagen.

## Revendications

1. Plaque calorifuge pressée composée d'un mélange d'acide silicique pyorgène dispersé et de laine de silicate d'aluminium auxquels on ajoute un produit troublant, caractérisée par le fait qu'un carbure de silicium, de bore, de tantale ou de tungstène seuls ou mélangés sont utilisés comme produit troublant d'une telle grosseur de grain que le refus de crible sur le tamis DIN d'une ouverture de maille de μm soit inférieur à 5%.

2. Utilisation d'une plaque calorifuge d'après la revendication 1 avec du carbure de bore comme produit troublant, dans des quantités comprises entre 20 et 35 pourcentages en poids dans des installations techniques nucléaires.

## Claims

1. A heat insulation board made by pressing a mix made up of highly dispersed pyrogenic silica and aluminium silicate wool with the addition of an opacifier, characterised in that as an opacifier use is made of a carbide of silicon, boron, tantalum or tungsten by itself or mixed together with any such substances in such a grain size that the residue on a DIN-sieve with a 10 microns mesh is under 5%.

2. A process for using a heat insulation board as claimed in claim 1 with boron carbide as the opacifier in amounts between 20 and 35% by weight in nuclear plant.